Europäisches Patentamt

European Patent Office

Office européen des brevets

(19)

(11) Publication number : **0 485 190 A2**

(12) **EUROPEAN PATENT APPLICATION**

(21) Application number : **91310259.6**

(51) Int. Cl.$^5$ : **G01V 3/10**

(22) Date of filing : **06.11.91**

(30) Priority : **07.11.90 GB 9024186**

(43) Date of publication of application :
**13.05.92 Bulletin 92/20**

(84) Designated Contracting States :
**AT BE CH DE DK ES FR GR IT LI LU NL SE**

(71) Applicant : **GEC-FERRANTI DEFENCE SYSTEMS LTD.**
**The Grove, Warren Lane**
**Stanmore, Middlesex HA7 4LY (GB)**

(72) Inventor : **Thomson, Richard Charles**
**50 Craigs Crescent**
**Edinburgh EH12 8HU (GB)**

(74) Representative : **Waters, Jeffrey et al**
**GEC Patent Department, GEC Marconi Limited, West Hanningfield Road**
**Great Baddow, Chelmsford, Essex CM2 8HN (GB)**

(54) **Security systems.**

(57) To overcome the disadvantages with existing systems for checking whether devices have been attached to the underside of vehicles, the vehicle is fitted with a pair of coils extending around the periphery of the underside of the vehicle, one of the coils being connected an a.c. generator and the other being connected to a level change detector. A metal object attached to the underside of the vehicle or, for that matter a wheel removed from the vehicle, would change the magnetic footprint of the vehicle and hence the mutual inductive coupling between the coils, resulting in a change in the level detector.

Fig.1.

EP 0 485 190 A2

This invention relates to security systems, especially for vehicles.

At present to ensure that an explosive device has not been attached to the underside of a vehicle, a user returning to the vehicle has to inspect visually the underside of the vehicle every time, using a mirror and torch mounted on a long handle. This method is unsatisfactory for a number for reasons.

The invention provides a security system for a vehicle, comprising a first coil extending around the periphery of the vehicle and an a.c. generator coupled to the coil, and a second coil extending around the periphery of the vehicle and a detector coupled to the coil for detecting changes in the signal induced in the second coil.

Any interference with the vehicle which changes the amount of magnetisable material within the area of the coil will be detected.

The coils are preferably fitted around the periphery of the underside of the vehicle and may be fitted on the underside or incorporated in the vehicle.

A security system for vehicle constructed in accordance with the invention will now be described by way of example with reference to the accompanying drawings, in which:

Figure 1 is a schematic plan view of the security system in a vehicle;

Figure 2 is a schematic view of the electrical circuit of the security system;

Figure 3 shows the operation of the threshold detector; and

Figure 4 is a diagram of a part of a suitable circuit for the level change detector.

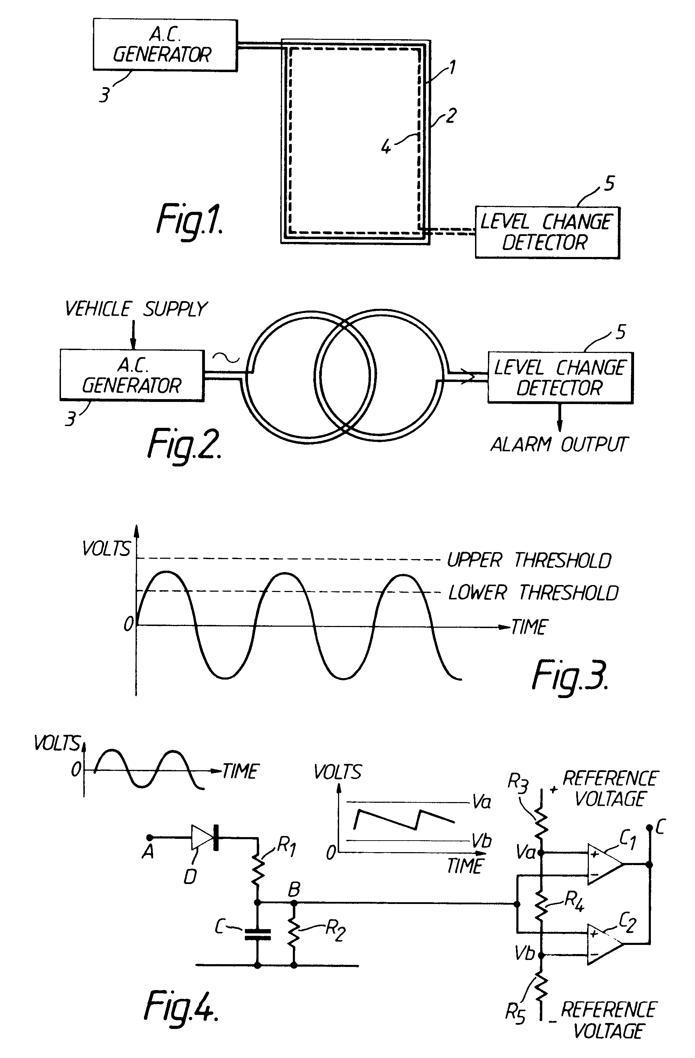

The security system comprises a first coil 1 extending around the periphery of the underside of a vehicle 2 shown in plan, the ends of the first coil being connected an a.c. generator 3, and a second coil 4 also extending around the periphery of the underside of the vehicle, and the ends of this coil are connected to a level change detector 5. The coils are electrically insulated from each other, but positioned adjacent to each other so that there is mutual inductance coupling between the coils. Thus, the alternating voltage produced by the a.c. generator induces an alternating voltage in the second coil 4 as shown in Figure 3. The level of the peaks of the alternating voltage remain substantially the same at all times since the magnetic footprint of the vehicle remains the same.

However, if a mass of metal is attached to the underside of the vehicle, the coupling between the coils will be increased and the output of the coil 4 will exceed the upper threshold, thereby setting off an alarm. Equally, if a mass of metal was removed from the vehicle e.g. by removal of a wheel, the mutual inductive coupling would decrease and the voltage level of the coil 4 would decrease below the lower threshold, again setting off the alarm.

A suitable circuit for the detector circuit is shown in Figure 4. The induced voltage in the second coil 4 is fed to rectifier D at terminal A and charges capacitor C in series with resistor $R_1$, forming an integrator circuit. Between charging periods, the capacitor is discharged via resistor $R_2$. The voltage at terminal B shows the sawtooth form illustrated. It is supplied to input terminal of a 'window' comparator, which produces an alarm output at terminal C when the voltage at terminal B falls outside reference thresholds Va and Vb set by potential divider $R_{3-5}$ (corresponding to the upper and lower thresholds illustrated in Figure 3). The comparator $C_1$, $C_2$ may be formed by an LM139/339 device with open collector outputs.

The coils 2 and 4 may have between 2 and 10 turns each, and the frequency of the a.c. generator may be between 10 and 100 KHz (too high a frequency will reduce the coupling between the coils since flux reversal in steel is restricted, and too low a frequency will increase the current in the coil and hence the ohmic loss).

The system has the advantage over a manual inspection of being active all the time and requiring no user involvement other than responding to the car alarm.

The a.c. generator may be supplied via an inverter from the d.c. power supply of the vehicle i.e. in the case of a car, the car battery.

The system could operate in conjunction with an acoustic sensor arranged to detect the sound of something being attached to the bodywork of the vehicle. This could reduce the risk of false alarms.

**Claims**

1. A security system for a vehicle comprising a first coil extending around the periphery of the vehicle and an a.c. generator coupled to the coil, and a second coil extending around the periphery of the vehicle and a detector coupled to the coil for detecting changes in the signal induced in the second coil.

2. A security systems as claimed in claim 1, in which the coils extend around the periphery of the underside of the vehicle.

3. A security system as claimed in claim 1 or claim 2, in which the detector has an upper and a lower threshold for detecting increases as well as decreases in the signal induced in the second coil.

Fig.1.

Fig.2.

Fig.3.

Fig.4.